# FASCICULE DE BREVET EUROPEEN

(11) **EP 2 643 600 B1**
(45) Date de publication et mention de la délivrance du brevet: **12.11.2014**
(21) Numéro de dépôt: 11799748.6
(22) Date de dépôt: 03.11.2011
(51) Int. Cl.: F16C 7/02

(54) **PROCÉDÉ DE FABRICATION D'UNE BIELLE MÉCANIQUE TUBULAIRE, ET BIELLE OBTENUE PAR UN TEL PROCÉDÉ**
VERFAHREN ZUR HERSTELLUNG EINER RÖHRENFÖRMIGEN MECHANISCHEN VERBINDUNGSSTANGE UND MIT EINEM DERARTIGEN VERFAHREN HERGESTELLTE VERBINDUNGSSTANGE
METHOD OF MANUFACTURING A TUBULAR MECHANICAL LINK ROD AND LINK ROD OBTAINED USING SUCH A METHOD

(30) Priorité: 22.11.2010 FR 1059568
(43) Date de publication de la demande: 02.10.2013
(73) Titulaire: Aircelle, 76700 Gonfreville L'Orcher (FR)
(72) Inventeur: KERMARREC, Fabien, F-76600 Le Havre (FR); VIEL, Cyrille, F-76310 Sainte Adresse (FR)
(74) Mandataire: Gaillarde, Frédéric F. Ch.
(86) Numéro de dépôt international: PCT/FR2011/052566
(87) Numéro de publication internationale: WO 2012/069724

(56) Documents cités:
- EP-A1- 0 839 593
- EP-A1- 2 241 459
- DE-A1- 3 243 238
- JP-A- 2007 076 547
- US-A1- 2008 118 303

## Description

La présente invention se rapporte à un procédé de fabrication d'une bielle mécanique tubulaire, et à une bielle mécanique obtenue par un tel procédé.

On utilise des bielles mécaniques tubulaires, c'est-à-dire à corps creux, notamment dans les domaines où la recherche de gain de poids est une préoccupation constante.

Parmi ces domaines, il y a en particulier celui de l'aéronautique : les bielles mécaniques tubulaires sont par exemple utilisées sur les trains d'atterrissage (barre de frein), dans les systèmes de maintien en position ouverte des capots de maintenance (capot moteur,...), dans les systèmes de suspensions moteurs (interface transmettant la poussée entre le moteur et le mât de l'aile), etc.

Une bielle mécanique tubulaire est classiquement composée d'un corps creux, comportant à chacune des ses extrémités une tête.

Chaque tête est typiquement conformée en chape mâle ou femelle, de manière à permettre la fixation de la bielle par goupille ou tout autre moyen aux organes avec lesquels elle doit coopérer.

On connaît de la technique antérieure, et notamment de EP 1 870 196, un procédé de fabrication d'une bielle tubulaire dans lequel on fabrique séparément le corps creux de la bielle d'une part, et les deux têtes de la bielle d'autre part, puis on vient rapporter ces têtes à chacune des extrémités du corps creux, par soudage.

L'inconvénient de ce procédé antérieur réside dans le fait que l'on doit réaliser des opérations de soudage à deux endroits distincts de la bielle.

De plus, avec cette conception antérieure, il n'est possible ni d'inspecter ni d'usiner les parties des cordons de soudure qui débouchent à l'intérieur du corps creux de la bielle, du fait de leur enfermement à l'intérieur du volume défini par ce corps creux.

L'accident géométrique résultant de la partie inférieure du pied du cordon de soudure induit, de plus, une concentration locale de contraintes qui nécessite d'épaissir localement la zone à souder.

En conséquence, il faut prévoir une surépaisseur locale (au niveau des zones d'assemblage) de l'alliage métallique (typiquement à base de nickel, de titane ou d'aluminium) formant la bielle. Le surpoids y afférent est donc doublé en présence de deux soudures.

Pour résoudre ce dernier inconvénient, on a pensé à réaliser une soudure unique de deux moitiés de bielle incorporant chacune leurs têtes respectives, chaque moitié étant formée d'un seul tenant : cette solution, décrite dans EP 0 839 593, permet effectivement une réduction du poids global de la bielle par rapport à une bielle à deux soudures, mais ne résout pas le problème de l'inspection et de l'usinage de la partie intérieure du cordon de soudage.

La présente invention a ainsi notamment pour but de fournir un procédé de fabrication d'une bielle mécanique tubulaire comprenant un corps creux et, à chacune des extrémités de ce corps, une tête, ce procédé étant remarquable en ce qu'il comprend les étapes suivantes :
a) fabrication d'une pièce d'un seul tenant, comprenant ledit corps creux et une première partie d'extrémité formant ou destinée à former l'une desdites têtes,
b) assemblage (par soudage, collage, vissage, goupillage,...) d'une deuxième partie à l'autre extrémité dudit corps creux, cette deuxième partie formant ou étant destinée à former l'autre desdites têtes, et cette deuxième partie comportant un alésage établissant une communication entre l'extérieur et l'intérieur dudit corps creux,
c) inspection et/ou usinage de la zone d'assemblage à l'intérieur dudit corps creux, en passant par ledit alésage.

Grâce à ces caractéristiques, le procédé selon l'invention permet, une fois l'opération d'assemblage réalisée, d'aller inspecter la qualité de l'assemblage à l'intérieur du corps creux, en introduisant les outils de contrôle appropriés par l'alésage susmentionné.

Cet alésage permet de plus d'introduire des outils permettant d'usiner la zone d'assemblage à l'intérieur du corps creux de la bielle : ceci permet d'obtenir une surface interne lisse ou présentant de très faibles rayons, permettant de minimiser autant que possible la concentration de contraintes dans la zone d'assemblage.

Suivant d'autres caractéristiques optionnelles du procédé selon l'invention :
- ledit assemblage est sélectionné dans le groupe comprenant le soudage, le vissage, le goupillage, le collage ;
- l'étape a) comprend les sous-étapes comportant, à partir d'une ébauche cylindrique pleine :
- a1) la réalisation d'un carottage à l'intérieur de cette ébauche,
- a2) la réalisation d'un usinage interne et d'un usinage externe de cette ébauche,
   de manière à obtenir une préforme tubulaire ;
   - l'étape a) comprend la sous-étape a2) comportant, à partir d'une ébauche cylindrique creuse obtenue par forgeage, laminage et/ou extrusion, la réalisation d'un usinage interne et d'un usinage externe de cette ébauche, de manière à obtenir une préforme tubulaire ;
   - l'étape a) comprend en outre la sous-étape supplémentaire a3) postérieure à l'étape a2), comportant le fluotournage de ladite préforme tubulaire : le fluotournage, consistant à déformer la préforme sur un mandrin par formage au moyen d'une ou plusieurs molettes, permet d'obtenir, de manière simple, rapide et sans enlèvement de matière, les variations d'épaisseur externe souhaitées dans l'épaisseur du corps creux de la bielle ;
   - l'étape a) comprend en outre une sous-étape a4) consistant à soumettre la pièce obtenue par fluotournage de ladite préforme tubulaire, à un traitement thermique visant à relaxer les contraintes induites par les opérations de fluotournage. L'élimination de ces contraintes a pour objectif de minimiser les déformations de la matière lors des opérations suivantes d'assemblage (soudage,...) et de finition ;
   - l'étape a) comprend en outre une sous-étape a5), consistant à usiner ladite première partie d'extrémité de manière à lui donner sa géométrie quasi finale de tête de bielle, cette géométrie pouvant être choisie dans le groupe comprenant une chape mâle et une chape femelle ;
   - après l'étape c) se trouve une étape consistant à usiner ladite première partie d'extrémité de manière à lui donner sa géométrie quasi finale de tête de bielle, cette géométrie pouvant être choisie dans le groupe comprenant une chape mâle et une chape femelle ;
   - avant l'étape b) se trouve une étape consistant à usiner ladite deuxième partie d'extrémité de manière à lui donner sa géométrie quasi finale de tête de bielle, cette géométrie pouvant être choisie dans le groupe comprenant une chape mâle et une chape femelle ;
   - après l'étape c) se trouve une étape consistant à usiner ladite deuxième partie d'extrémité de manière à lui donner sa géométrie finale de tête de bielle, cette géométrie pouvant être choisie dans le groupe comprenant une chape mâle et une chape femelle ;
   - l'assemblage prévu à l'étape b) est réalisé selon l'un des procédés compris dans le groupe comprenant :
      - le soudage par des moyens à haute énergie, sélectionnés dans le groupe comprenant le soudage laser et le soudage à faisceau d'électrons, pouvant nécessiter de plus l'introduction d'un pare-feu à l'intérieur du corps creux de la bielle, par ledit alésage,
      - le soudage par des moyens de friction, sélectionnés dans le groupe comprenant la friction inertielle, la friction pilotée, le soudage par friction-malaxage (ou « Friction Stir Welding »),
      - le soudage par des moyens à l'arc, sélectionnés dans le groupe comprenant le soudage TIG (« Tunsten Inert Gas »), le soudage plasma,
      - le vissage de ladite deuxième partie d'extrémité sur le corps tubulaire,
      - le goupillage de ladite deuxième partie d'extrémité sur le corps tubulaire ;
   - l'inspection de l'étape c) est réalisée avec des moyens de contrôle non destructif, sélectionnés dans le groupe comprenant le contrôle par rayons X, le contrôle par ressuage, le contrôle par ultra-sons, le contrôle magnétoscopique, le contrôle par courants de Foucault ;
   - après le traitement thermique susmentionné se trouve une étape de finition de l'usinage de deux extrémités de la bielle ;
   - après l'ensemble des étapes susmentionnées se trouve une étape finition de l'état de surface de la bielle ;
   - cette étape de finition est réalisée par un procédé sélectionné dans le groupe comprenant le sablage, le grenaillage, le décapage, la peinture ou tout autre traitement de surface

La présente invention se rapporte également à une bielle tubulaire obtenue par un procédé conforme à ce qui précède (forage profond du corps tubulaire dans une barre forgée et/ou laminée).

D'autres caractéristiques et avantages de la présente invention apparaîtront à la lumière de la description qui va suivre, et à l'examen des figures ci-annexées, dans lesquelles :
- la figure 1 représente une vue en perspective d'une structure de support d'un turboréacteur à un mât d'aéronef incorporant deux bielles tubulaires selon l'invention,
- la figure 2 est une vue en perspective à plus grande échelle de l'une des deux bielles tubulaires du dispositif de la figure 1,
- la figure 3 est une vue en coupe axiale d'une pièce destinée à former la bielle tubulaire de la figure 2,
- la figure 4 est une vue en coupe axiale de cette pièce sur laquelle on est en train d'assembler une tête présentant une géométrie de chape femelle,
- la figure 5 est une vue schématique de la zone V de la figure 4, illustrant le cordon de soudure de la chape femelle sur la pièce de la figure 3,
- la figure 6 est une vue à plus grande échelle de la zone V de la figure 4, permettant de visualiser le cordon de soudure de la tête de bielle conformée en chape femelle sur la pièce de la figure 3.

Sur l'ensemble de ces figures, des références identiques désignent des organes ou ensembles d'organes identiques ou analogues.

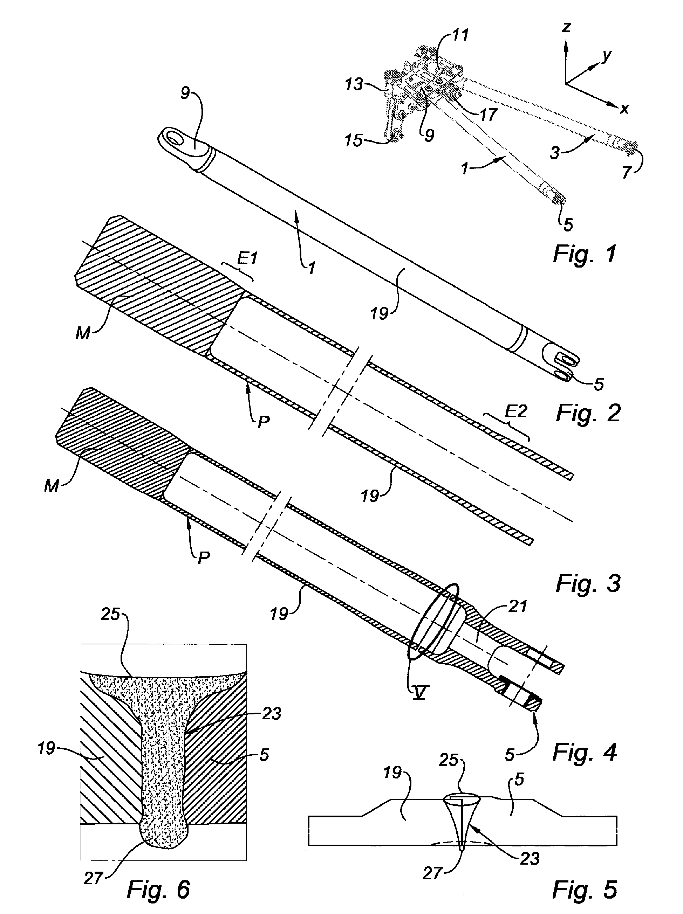

Sur la figure 1, le repère X, Y, Z désigne respectivement les directions axiale, transversale et verticale d'un turboréacteur (non représenté) destiné à coopérer avec le dispositif de suspension représenté à cette figure.

Comme on peut le voir sur la figure 1, ce dispositif de suspension comporte typiquement deux bielles 1, 3, dont les extrémités avant 5, 7 comportent des chapes males et/ou femelles destinées à coopérer avec une partie avant du turboréacteur, et dont les parties arrière 9, 11, comportent des chapes mâles et/ou femelles coopérant avec une poutre de suspension 13 destinée à coopérer elle-même avec un mât de suspension du turboréacteur (non représenté), et avec le cadre avant du carter de soufflante, par l'intermédiaire de bielles appropriées 15, 17.

On a représenté l'une de ces deux bielles, à savoir la bielle 1, à plus grande échelle sur la figure 2.

Cette bielle doit être capable de reprendre des efforts de poussée considérables engendrés par le turboréacteur, tout en présentant un poids le plus faible possible, de manière à satisfaire au cahier des charges en vigueur dans le domaine de l'aéronautique.

Pour cette raison, il importe d'une part que l'alliage métallique formant cette bielle soit adapté autant que possible aux conditions de fonctionnement de manière à présenter des propriétés spécifiques les plus intéressantes possibles (propriétés mécaniques divisées par la densité), et d'autre part que cette bielle soit tubulaire, c'est-à-dire que son corps 19 soit creux.

Les alliages utilisés pour former ce type de bielle sont typiquement des alliages à base de nickel, de titane ou d'aluminium.

Le procédé de l'invention permettant d'obtenir la bielle 1 va à présent être explicité en détail.

On commence tout d'abord par fabriquer la pièce P d'un seul tenant visible à la figure 3.

Cette pièce P, de forme cylindrique, comporte d'une part une partie massive M destinée à former la chape mâle (ou femelle) 9, et d'autre part une partie tubulaire 19 destinée à former le corps creux de la bielle 1.

La pièce P de la figure 3 peut être obtenue à partir d'une ébauche cylindrique pleine, dans laquelle on réalise une opération de carottage de manière pour obtenir la partie tubulaire 19.

On réalise ensuite une opération d'usinage interne et externe de cette pièce, permettant l'obtention d'une préforme.

On soumet ensuite cette préforme à une opération de fluotournage, consistant à déformer cette préforme sur un mandrin rotatif par formage au moyen d'une ou plusieurs mollettes.

Cette opération de fluotournage permet, de manière simple, rapide et sans enlèvement de matière, de faire varier à volonté l'épaisseur de la préforme comme cela est indiqué par les références E1 et E2 sur la figure 3.

La pièce P peut également être obtenue par forage (non débouchant) de la partie tubulaire dans une barre forgée et / ou laminée.

La pièce P peut également être obtenue par extrusion de la partie tubulaire au sein d'une barre forgée et / ou laminée.

A l'opposé de la partie M, on vient ensuite rapporter sur la pièce P l'autre extrémité de bielle 5, pouvant présenter une forme de chape femelle, comme cela est visible à la figure 4.

L'assemblage de cette tête de bielle 5 sur la pièce P peut s'effectuer:
- par soudage à haute énergie, de préférence par laser ou par faisceau à électrons,
- par soudage friction, de préférence par friction pilotée, par friction inertielle ou par friction-malaxage,
- par soudage à l'arc, de préférence par soudage TIG (« Tungsten Inert Gas ») ou par soudage plasma,
- par vissage de ladite deuxième extrémité sur la pièce P,
- par goupillage de ladite deuxième extrémité sur la pièce P.

Comme cela est visible à la figure 4, la tête de bielle 5 comporte un alésage 21 permettant la communication entre l'extérieur et l'intérieur du corps creux 19.

Comme cela est visible sur les figures 5 et 6, l'opération de soudage de la tête 5 sur le corps 19 engendre un cône 23 de matière métallique fondue, dont la partie large 25 débouche à l'extérieur du corps creux 19, et dont la partie étroite 27 débouche à l'intérieur de ce corps creux 19. La géométrie du joint soudé peut différer selon la technologie de soudage sélectionnée.

Ultérieurement à l'opération de soudage, il importe de pouvoir usiner parfaitement tant la partie extérieure 25 du cône 23, que la partie intérieure 27, de manière à obtenir un état de surface impeccable et à éviter toute concentration locale de contraintes nécessitant un épaississement local pour que la bielle soit compatible des conditions de fonctionnement.

Grâce à la présence de l'alésage 21 dans la tête de bielle 5, on peut non seulement inspecter la qualité de soudage de l'intérieur du corps creux 19, mais encore usiner la partie étroite 27 du cône de soudage 23, de manière à obtenir l'état de surface parfait recherché.

A noter que les opérations de contrôle de la qualité du soudage depuis l'intérieur du corps creux 19 peuvent comprendre notamment les opérations de contrôle par rayons X, ainsi que des opérations de pulvérisation d'un produit de ressuage visant à contrôler l'état de surface de la zone soudée.

On notera de plus que l'alésage 21 réalisé dans la chape de bielle 5 permet d'introduire un pare-feu, c'est-à-dire un élément métallique permettant d'éviter que le faisceau d'énergie, utilisé pour le soudage, du corps creux 19 n'atteigne de manière incontrôlée le côté diamétralement opposé de ce corps creux.

A noter que des étapes supplémentaires peuvent intervenir dans la fabrication de la bielle 1.

Ces étapes peuvent comprendre notamment une étape de traitement thermique de la pièce P de la figure 3, permettant d'en libérer les contraintes avant son assemblage avec la tête de bielle 5.

Ces étapes peuvent comprendre des étapes de traitement thermique de la pièce assemblée de la figure 5 permettant d'apporter aux alliages métalliques les propriétés mécaniques recherchées.

Ces étapes peuvent comprendre des étapes d'usinage de finition des extrémités de la bielle assemblée (figure 5) de manière à d'obtenir la géométrie finale de la pièce.

Ces étapes supplémentaires peuvent également comprendre des étapes de finition des surfaces du type sablage, grenaillage, peinture, traitement de surface,....

On notera également que dans le cadre du procédé selon l'invention, certaines étapes peuvent être permutées entre elles.

Ainsi, dans le mode de réalisation présenté précédemment, on proposait de fixer la tête de bielle 5 une fois usinée sur la pièce P, laquelle comportait à son extrémité opposée un embout massif M destiné à être usiné à la fin des opérations pour former la chape mâle 9.

Mais on aurait pu bien entendu envisager d'usiner l'embout M de manière à lui conférer sa forme finale ou quasi finale de chape mâle 9 avant d'assembler la tête femelle 5.

On aurait pu également envisager de fixer sur la pièce P une tête de bielle 5 sous forme massive, que l'on aurait usinée après son soudage sur le corps creux 19.

Comme on peut le comprendre à la lumière de ce qui précède, le procédé selon l'invention permet de réaliser une bielle mécanique tubulaire, c'est-à-dire à corps creux, dont seule l'une des deux extrémités est rapportée par soudage, ou par un autre moyen d'assemblage.

La présence d'un alésage au sein de cette extrémité rapportée permet d'inspecter la zone d'assemblage depuis l'intérieur du corps creux de la bielle, offrant ainsi toutes les garanties nécessaires de qualité et de fiabilité de cette soudure.

Bien entendu, la présente invention n'est nullement limitée au mode de réalisation décrit et représenté, fourni à titre de simple exemple.

## Revendications

1. Procédé de fabrication d'une bielle tubulaire comprenant un corps creux (19) et, à chacune des extrémités de ce corps, une tête (5, 9), ce procédé étant **caractérisé en ce qu'**il comprend les étapes suivantes :
a) fabrication d'une pièce d'un seul tenant (P), comprenant ledit corps creux (19) et une première partie d'extrémité (M) formant ou destinée à former l'une desdites têtes,
b) assemblage d'une deuxième partie (5) à l'autre extrémité dudit corps creux (19), cette deuxième partie formant ou étant destinée à former l'autre desdites têtes, et cette deuxième partie comportant un alésage (21) établissant une communication entre l'extérieur et l'intérieur dudit corps creux (19),
c) inspection et/ou usinage de la zone d'assemblage (23) à l'intérieur dudit corps creux, en passant par ledit alésage (21).

2. Procédé selon la revendication 1, dans lequel ledit assemblage est sélectionné dans le groupe comprenant le soudage, le vissage, le goupillage, le collage.

3. Procédé selon l'une des revendications 1 ou 2, dans lequel l'étape a) comprend les sous-étapes comportant, à partir d'une ébauche cylindrique pleine :
- a1) la réalisation d'un carottage à l'intérieur de cette ébauche,
- a2) la réalisation d'un usinage interne et d'un usinage externe de cette ébauche,
de manière à obtenir une préforme tubulaire.

4. Procédé selon l'une des revendications 1 ou 2, dans lequel l'étape a) comprend la sous-étape a2) comportant, à partir d'une ébauche cylindrique creuse obtenue par forgeage, laminage et/ou extrusion, la réalisation d'un usinage interne et d'un usinage externe de cette ébauche, de manière à obtenir une préforme tubulaire.

5. Procédé selon l'une des revendications 3 ou 4, dans lequel l'étape a) comprend en outre la sous-étape supplémentaire a3) postérieure à l'étape a2), comportant le fluotournage de ladite préforme tubulaire.

6. Procédé selon la revendication 5, dans lequel l'étape a) comprend en outre une sous-étape a4) consistant à soumettre la pièce (P) obtenue par fluotournage de ladite préforme tubulaire, à un traitement thermique visant à relaxer les contraintes induites par les opérations de fluotournage.

7. Procédé selon l'une quelconque des revendications précédentes, dans lequel l'étape a) comprend en outre une sous-étape a5), consistant à usiner ladite première partie d'extrémité (M) de manière à lui donner sa géométrie quasi finale de tête de bielle (9), cette géométrie pouvant être choisie dans le groupe comprenant une chape mâle et une chape femelle.

8. Procédé selon l'une des quelconques revendications 1 à 6, dans lequel après l'étape c) se trouve une étape consistant à usiner ladite première partie d'extrémité (M) de manière à lui donner sa géométrie quasi finale de tête de bielle (9), cette géométrie pouvant être choisie dans le groupe comprenant une chape mâle et une chape femelle.

9. Procédé selon l'une quelconque des revendications 1 à 6, dans lequel avant l'étape b) se trouve une étape consistant à usiner ladite deuxième partie d'extrémité de manière à lui donner sa géométrie quasi finale de tête de bielle (5), cette géométrie pouvant être choisie dans le groupe comprenant une chape mâle et une chape femelle.

10. Procédé selon l'une quelconque des revendications 1 à 6, dans lequel après l'étape c) se trouve une étape consistant à usiner ladite deuxième partie d'extrémité de manière à lui donner sa géométrie finale de tête de bielle (5), cette géométrie pouvant être choisie dans le groupe comprenant une chape mâle et une chape femelle.

11. Procédé selon l'une quelconque des revendications précédentes, dans lequel l'assemblage prévu à l'étape b) est réalisé selon l'un des procédés compris dans le groupe comprenant :
- le soudage par des moyens à haute énergie, sélectionnés dans le groupe comprenant le soudage laser et le soudage à faisceau d'électrons, pouvant nécessiter l'introduction d'un pare-feu à l'intérieur du corps creux de la bielle, par ledit alésage,
- le soudage par des moyens de friction, sélectionnés dans le groupe comprenant la friction inertielle, la friction pilotée, la friction-malaxage (ou « Friction Stir Welding »),
- le soudage par des moyens à l'arc, sélectionnés dans le groupe comprenant le soudage TIG (« Tunsten Inert Gas »), le soudage plasma.
- le vissage de ladite deuxième partie d'extrémité sur le corps tubulaire,
- le goupillage de ladite deuxième partie d'extrémité sur le corps tubulaire.

12. Procédé selon l'une quelconque des revendications précédentes, dans lequel l'inspection de l'étape c) est réalisée avec des moyens de contrôle non destructif, sélectionnés dans le groupe comprenant le contrôle par rayons X, le contrôle par ressuage, le contrôle ultra-sons, le contrôle magnétoscopique, le contrôle par courants de Foucault.

13. Procédé selon la revendication 6, dans lequel après ledit traitement thermique se trouve une étape de finition de l'usinage des deux extrémités de la bielle.

14. Procédé selon l'une quelconque des revendications précédentes, **caractérisé en ce qu'**il comprend une étape finale de finition de l'état de surface de la bielle.

15. Procédé selon la revendication 14, dans lequel ladite étape de finition est réalisée par un procédé sélectionné dans le groupe comprenant le sablage, le grenaillage, le décapage, la peinture ou autre traitement de surface.

16. Bielle tubulaire (1) obtenue par un procédé conforme à l'une quelconque des revendications précédentes.

## Patentansprüche

1. Verfahren zur Herstellung einer rohrförmigen Pleuelstange, umfassend einen hohlen Körper (19), und, an jedem der Enden dieses Körpers, einen Kopf (5, 9), wobei dieses Verfahren **dadurch gekennzeichnet ist, dass** es die folgenden Schritte umfasst:
a) Herstellen eines Teils aus einem einzigen Stück (P), umfassend den hohlen Körper (19) und einen ersten Endteil (M), der einen der Köpfe bildet oder zu dessen Bildung ausgelegt ist,
b) Zusammenbauen eines zweiten Teils (5) am anderen Ende des hohlen Körpers (19), wobei dieser zweite Teil den anderen der Köpfe bildet oder zu dessen Bildung ausgelegt ist und dieser zweite Teil eine Bohrung (21) umfasst, die eine Verbindung zwischen der Außenseite und der Innenseite des hohlen Körpers (19) festsetzt,
c) Überprüfen und/oder Bearbeiten des Bereichs des Zusammenbaus (23) im Inneren des hohlen Körpers durch den Durchlauf durch die Bohrung (21).

2. Verfahren nach Anspruch 1, wobei der Zusammenbau ausgewählt ist aus der Gruppe, umfassend die Schweißung, Verschraubung, Verstiftung und Verklebung.

3. Verfahren nach einem der Ansprüche 1 oder 2, wobei der Schritt a) die Unterschritte umfasst, die ausgehend von einem zylindrischen vollen Rohling, Folgendes umfassen:
- a1) Durchführen einer Kernbohrung im Inneren dieses Rohlings,
- a2) Durchführung einer internen Bearbeitung und einer externen Bearbeitung dieses Rohlings,
um eine rohrförmige Vorform zu erhalten.

4. Verfahren nach einem der Ansprüche 1 oder 2, wobei der Schritt a) den Unterschritt a2) umfasst, der, ausgehend von einem hohlen zylindrischen Rohling, der durch Schmieden, Laminieren und/oder Extrudieren erhalten wird, die Durchführung einer internen Bearbeitung und einer externen Bearbeitung dieses Rohlings umfasst, um eine rohrförmige Vorform zu erhalten.

5. Verfahren nach einem der Ansprüche 3 oder 4, wobei der Schritt a) außerdem den zusätzlichen Unterschritt a3) nach dem Schritt a2) umfasst, umfassend das Abstreckdrücken der rohrförmigen Vorform.

6. Verfahren nach Anspruch 5, wobei der Schritt a) außerdem einen Unterschritt a4) umfasst, der darin besteht, das Stück (P), erhalten durch Abstreckdrücken der rohrförmigen Vorform, einer thermischen Behandlung zu unterziehen, die darauf abzielt, die Spannungen, die durch die Abstreckdrück-Vorgänge induziert wurden, zu entspannen.

7. Verfahren nach einem der vorhergehenden Ansprüche, wobei der Schritt a) außerdem einen Unterschritt a5) umfasst, der darin besteht, den ersten Endabschnitt (M) so zu bearbeiten, das ihm seine fast endgültige Geometrie eines Pleuelstangenkopfes (9) verliehen wird, wobei diese Geometrie aus der Gruppe ausgewählt werden kann, umfassend einen Außen- und einen Innen-Gabelkopf

8. Verfahren nach einem der Ansprüche 1 bis 6, wobei nach dem Schritt c) ein Schritt erfolgt, der darin besteht, den ersten Endabschnitt (M) so zu bearbeiten, das ihm seine fast endgültige Geometrie eines Pleuelstangenkopfes (9) verliehen wird, wobei diese Geometrie aus der Gruppe ausgewählt werden kann, umfassend einen Außen- und einen Innen-Gabelkopf.

9. Verfahren nach einem der Ansprüche 1 bis 6, wobei vor dem Schritt b) ein Schritt erfolgt, der darin besteht, den zweiten Endabschnitt so zu bearbeiten, dass ihm seine fast endgültige Geometrie eines Pleuelstangenkopfes (5) verliehen wird, wobei diese Geometrie aus der Gruppe ausgewählt werden kann, umfassend einen Außen- und einen Innen-Gabelkopf.

10. Verfahren nach einem der Ansprüche 1 bis 6, wobei nach dem Schritt c) ein Schritt erfolgt, der darin besteht, den zweiten Endabschnitt so zu bearbeiten, dass ihm seine fast endgültige Geometrie eines Pleuelstangenkopfes (5) verliehen wird, wobei diese Geometrie aus der Gruppe ausgewählt werden kann, umfassend einen Außen- und einen Innen-Gabelkopf.

11. Verfahren nach einem der vorhergehenden Ansprüche, wobei der in Schritt b) vorgesehene Zusammenbau nach einem der Verfahren, enthalten in der Gruppe durchgeführt wird, umfassend:
- die Schweißung durch Mittel mit hoher Energie, ausgewählt aus der Gruppe umfassend die Laserschweißung und die Elektronenstrahlschweißung, die die Einführung eines Feuerschutzes in das Innere des hohlen Körpers der Pleuelstange durch die Bohrung erfordern kann,
- die Schweißung durch Reibungsmittel, ausgewählt aus der Gruppe, umfassend die Trägheitsreibung, die gesteuerte Friktion, das Rührreibung (oder "Friction Stir-Schweißen"),
- die Schweißung durch Lichtbogenmittel, ausgewählt aus der Gruppe, umfassend die TIG ("Tunsten Inert Gas")-Schweißung, die Plasma-Schweißung.
- der Verschraubung des zweiten Endteils auf dem rohrförmigen Körper,
- der Verstiftung des zweiten Endteils auf dem rohrförmigen Körper.

12. Verfahren nach einem der vorhergehenden Ansprüche, wobei die Überprüfung von Schritt c) mit nicht zerstörenden Kontrollmitteln durchgeführt wird, ausgewählt aus der Gruppe, umfassend die Kontrolle durch Röntgenstrahlen, der Kontrolle durch Ausschwitzen, der Kontrolle durch Ultraschall, die magnetoskopische Kontrolle und die Kontrolle durch Wirbelströme.

13. Verfahren nach Anspruch 6, wobei nach der thermischen Behandlung ein Schritt zur Beendigung der Bearbeitung der zwei Enden der Pleuelstange stattfindet.

14. Verfahren nach einem der vorhergehenden Ansprüche, **dadurch gekennzeichnet, dass** es einen endgültigen Schritt zur Beendigung des Zustands der Oberfläche der Pleuelstange umfasst.

15. Verfahren nach Anspruch 14, wobei der Schritt des Beendigens durch ein Verfahren durchgeführt wird, ausgewählt aus der Gruppe, umfassend die Sandstrahlung, die Abstrahlung, die Abbeizung, den Anstrich oder eine andere Oberflächenbehandlung.

16. Rohrförmige Pleuelstange (1), erhalten durch ein Verfahren nach einem der vorhergehenden Ansprüche.

## Claims

1. A method for manufacturing a tubular connecting rod comprising a hollow body (19) and, at each of the ends of this body, a head (5, 9), this method being **characterized in that** it comprises the following steps:
a) manufacturing a one-piece part (P), comprising said hollow body (19) and a first end portion (M) forming or intended to form one of said heads,
b) assembling a second portion (5) with the other end of said hollow body (19), this second portion forming or being intended to form the other of said heads, and this second portion comprising a bore (21) establishing a communication between the outside and the inside of said hollow body (19),
c) inspecting and/or machining the assembly area (23) inside of said hollow body, by passing by said bore (21).

2. The method according to claim 1, wherein said assembly is selected from the group comprising welding, screwing, pinning, bonding.

3. The method according to any of claims 1 or 2, wherein step a) comprises the sub-steps including, starting from a solid cylindrical blank:
- a1) performing a coring inside this blank,
- a2) performing an internal machining and an external machining of this blank,
so as to obtain a tubular preform.

4. The method according to any of claims 1 or 2, wherein the step a) comprises the sub-step a2) including, starting from a hollow cylindrical blank obtained by forging, rolling and/or extrusion, performing an internal machining and an external machining of this blank, so as to obtain a tubular preform.

5. The method according to any of claims 3 or 4, wherein step a) further comprises the supplementary sub-step a3) subsequent to the step a2) including the flow-forming of said tubular preform.

6. The method according to claim 5, wherein the step a) further comprises a sub-step a4) consisting of subjecting the part (P) obtained by flow-forming of said tubular preform, to a heat treatment aiming to relax the stresses induced by the flow-forming operations.

7. The method according to any one of the preceding claims, wherein the step a) further comprises a sub-step a5), consisting of machining said first end portion (M) so as to give it its near-final geometry of the connecting rod head (9), this geometry may be chosen from the group comprising a male clevis and a female clevis.

8. The method according to any one of claims 1 to 6, wherein after the step c) comes a step consisting of machining said first end portion (M) so as to give it its near-final geometry of the connecting rod head (9), this geometry may be chosen from the group comprising a male clevis and a female clevis.

9. The method according to any of one of claims 1 to 6, wherein before the step b) comes a step consisting of machining said second end portion so as to give it its near-final geometry of the connecting rod head (5), this geometry may be chosen from the group comprising a male clevis and a female clevis.

10. The method according to any one of claims 1 to 6, wherein after the step c) comes a step consisting of machining said second end portion so as to give it its final geometry of the connecting rod head (5), this geometry may be chosen from the group comprising a male clevis and a female clevis.

11. The method according to any one of the preceding claims, wherein the assembly provided in the step b) is performed according to any of the methods comprised in the group comprising:
- the welding by high energy means, selected from the group comprising the laser welding and the electron beam welding, which may require the introduction of a firewall inside the hollow body of the connecting rod, by said bore,
- the welding by frictional means, selected from the group comprising the inertial friction, the controlled friction, the Friction Stir Welding,
- the welding by arc means, selected from the group comprising the TIG ("Tungsten Inert Gas") welding, the plasma welding.
- the screwing of said second end portion on the tubular body,
- the pinning of said second end portion on the tubular body.

12. The method according to any one of the preceding claims, wherein the inspection of the step c) is performed with non destructive inspection means, selected from the group comprising X-ray inspection, dye penetrant inspection, ultrasonic inspection, magnetic crack inspection, eddy-current inspection.

13. The method according to claim 6, wherein after said heat treatment comes a finishing step of the machining of the two ends of the connecting rod.

14. The method according to any one of the preceding claims, **characterized in that** it comprises a final step of finishing the surface condition of the connecting rod.

15. The method according to claim 14, wherein said finishing step is performed by a method selected from the group comprising sandblasting, shot blasting, stripping, painting or other surface treatments.

16. A tubular connecting rod (1) obtained by a method in conformity with any one of the preceding claims.
